# EUROPEAN PATENT SPECIFICATION

(11) **EP 3 770 438 B1**
(45) Date of publication and mention of the grant of the patent: **24.12.2025**
(21) Application number: 20184135.0
(22) Date of filing: 06.07.2020
(51) Int. Cl.: F04D 13/06, F04D 15/00, F04B 49/06

(54) **DEVICE FOR THE CONTROL AND MANAGEMENT OF ONE OR MORE ELECTRIC PUMPS**
VORRICHTUNG ZUR STEUERUNG UND VERWALTUNG EINER ODER MEHRERER ELEKTRISCHER PUMPEN
DISPOSITIF POUR LE CONTRÔLE ET LA GESTION D'UNE OU DE PLUSIEURS POMPES ÉLECTRIQUES

(30) Priority: 25.07.2019 IT 201900012846
(43) Date of publication of application: 27.01.2021
(73) Proprietor: Dab Pumps S.p.A., 35035 Mestrino (Padova) (IT)
(72) Inventor: SINICO, Francesco, 36075 MONTECCHIO MAGGIORE VI (IT); SPORTOLETTI, Sergio, 56100 PISA (IT); CIUCHI, Francesco, 56025 PONTEDERA PI (IT)
(74) Representative: Tiburzi, Andrea

(56) References cited:
- EP-B1- 2 309 133
- US-A1- 2007 258 827
- US-A1- 2011 202 189
- US-B1- 7 458 782
- US-B2- 9 262 361

## Description

The present invention relates to an immersion electric pump system including a device for the control and management of at least one immersion electric pump and at least one immersion electric pump to which such a device can be applied.

Devices for the optionally remote control and management of an electric pump are currently widespread.

These devices are fundamentally important, since they provide the user with data on the operation of the electric pump and allow said user, if necessary, to act thereon.

Moreover, devices for the remote control and management of an electric pump allow the user to have an overview of the operation and to act on the electric pump without having to interact directly therewith.

This is particularly advantageous in situations in which an electric pump is installed in a region that is inaccessible and/or difficult to reach.

These remote control and management devices, which are also provided with a user interface, are substantially of two types:
- the ones connected by means of a physical cable for transmitting data to the electric pump,
- the ones connected to the electric pump by means of a wireless data link.

These known methods have some drawbacks.

Control and management devices connected by means of a physical cable to the electric pump have the drawback of having to be provided with a dedicated cable, which takes up space and can have a length of even several meters.

Furthermore, it is necessary to provide two electrical outlets from the electric pump, one for its power supply and one for connection to the control and management device.

This drawback is increased in the case of immersion electric pumps, in which it is necessary to provide an outlet for connection to the control and management device also in the well/tank where the electric pump is used.

Control and management devices connected to the electric pump by means of a wireless data link instead require the presence of data communication means on the electric pump and complementary data communication means on said devices.

The means and the complementary means are connected for example by means of a Wi-Fi mains.

These devices have the drawback that they cannot be used in all kinds of electric pump.

For example, in immersion electric pumps, a wireless link might not reach the electric pump for example due to the depth of the well/tank, which can be even on the order of hundreds of meters, or due to the thickness and composition of its walls.

The relevant prior art also comprises the patent documents US-B-7458782, US-A-2011202189 and EP-B-2309133.

The aim of the present invention is to provide an immersion electric pump system including a device for the control and management of an electric pump and an electric pump to which it is possible to apply such a device which can improve the background art in one or more of the aspects indicated above.

Within this aim, an object of the invention is to provide a device for the control and management of an electric pump that allows remote interaction with the electric pump without requiring a dedicated cable for connection to the electric pump.

Another object of the invention is to provide a device for the control and management of an electric pump that allows remote control by means of a dedicated smartphone and/or tablet application, even for immersion electric pumps.

A further object of the invention is to provide an electric pump to which it is possible to apply a device capable of achieving the aim and objects listed above and to overcome the described drawbacks.

Furthermore, an object of the present invention is to overcome the drawbacks of the background art in a manner that is alternative to any existing solutions.

Another object of the invention is to provide a device for the control and management of an electric pump and an electric pump to which such a device is applicable which are highly reliable, relatively easy to provide and at competitive costs.

This aim, as well as these and other objects which will become better apparent hereinafter and are achieved by an immersion electric pump system according to claim 1.

Further characteristics and advantages of the invention will become better apparent from the description of a preferred but not exclusive embodiment of the device for the control and management of an electric pump and of the electric pump with such a device, according to the invention, illustrated by way of non-limiting example in the accompanying drawings, wherein:
Figure 1 is a view of a first embodiment of a device for the control and management of an electric pump, according to the invention;
Figure 2 is a view of a second embodiment of application of a device for the control and management of an electric pump, according to the invention;

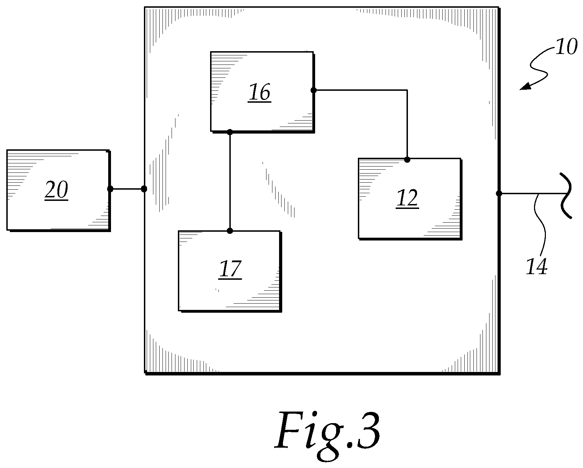

Figure 3 is a schematic internal view of a device for the control and management of an electric pump, according to the invention.

With reference to the figures, a device for the control and management of an electric pump according to the invention is designated generally by the reference numeral 10.

The device 10 is applied to an electric pump 11, of a per se known type.

One of the particularities of the invention resides in that the device 10 and the electric pump 11 are connected by means of a power line data link, also known as PLC (Power Line Communication).

The device 10 comprises PLC data link means 12 connected to complementary PLC data link means 13 of the electric pump 11.

The PLC data link allows to utilize the electrical mains that is present, provided that the electric pump 11 and the device 10 are connected to the same single-phase mains L.

The mains L is the electrical mains for the power supply of the electric pump 11 and of the device 10.

The device 10 is connected to the mains L by means of a first connection and electric power supply cable 14.

The electric pump 11 is connected to the mains L by means of a second connection and electric power supply cable 15.

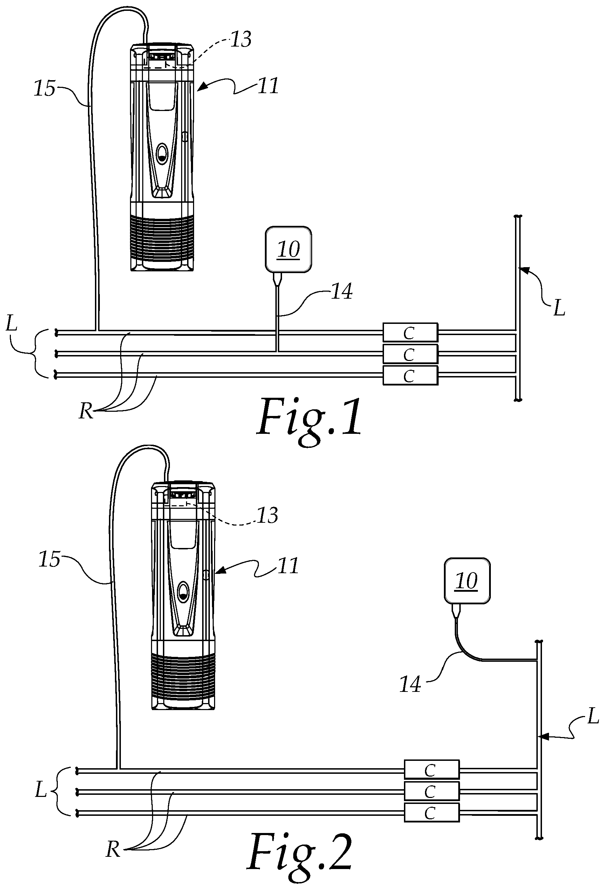

As shown in Figures 1 and 2, the device 10 is not required to be connected to the same branch R of the mains L as the electric pump 11, but it is sufficient for it to be connected to any branch R of the mains L.

With reference to Figure 2, the device 10 can be connected to the mains L even upstream of the meters C.

It should be noted that the characteristic of the PLC link allows remote control without the need to use a dedicated physical connecting cable but by utilizing the existing electrical mains.

The electric pump 11, shown in the figures, is an immersion electric pump.

However, in an example not forming part of the invention the electric pump 11 can also be a surface electric pump.

The complementary PLC data link means 13 are connected electrically in turn to the control and power supply unit of the electric pump 11, not shown in the figures.

The PLC data link means 12 are connected electrically to an actuation element 16 of the device 10.

The actuation element 16 is connected to a local user interface 20 and/or to wireless data link means 17.

The actuation element 16 is for example a microprocessor.

The wireless data link means are for example Wi-Fi link means. The wireless data link means are adapted for communication with smartphones and/or tablets, not shown in the figures, for the management of the electric pump 11 by means of a dedicated application.

In this case, the user interface is constituted by the smartphone and/or tablet and by the dedicated application contained therein.

In this manner it is possible to remotely manage, by means of the application for smartphones and/or tablets, immersion electric pumps that are normally not reached by wireless links.

It should be noted that by means of the device 10 it is possible to control and manage even multiple electric pumps 11, all connected to the same single-phase electrical mains L.

By means of the PLC link between the device 10 and one or more electric pumps 11 it is possible to control and interact with them, even remotely, by utilizing substantially the electrical power supply mains L of the former and of the latter.

In practice it has been found that the invention achieves the intended aim and objects, providing a device for the control and management of an electric pump that allows remote interaction with the electric pump without requiring a dedicated cable for connection to the electric pump.

The invention provides a device for the control and management of an electric pump that allows remote control, by means of a dedicated smartphone and/or tablet application, also for immersion electric pumps.

Finally, the invention provides an electric pump to which a device is applied which is capable of achieving the aim and objects listed above and of overcoming the described drawbacks.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An immersion electric pump system, comprising;
- a device (10) for the control and management of at least one immersion electric pump, comprising:
- an element (16) for the actuation of said device (10);
- a user interface (20), connected to said actuation element (16);
- PLC data link means (12); and
- wireless data link means (17);
- the system further comprising said at least one immersion electric pump (11), comprising:
- a pump housing configured to be immersed;
- an actuation and power supply unit and;
- complementary PLC data link means (13) arranged within the pump housing and connected to said actuation and power supply unit;
- said complementary PLC data link means (13) being connectable to said device (10);
**characterized in that**:
- said complementary PLC data link means (13) is connectable to said PLC data link means (12) to receive control signals from said user interface,
- said user interface (20) is constituted by a smartphone or tablet and by a dedicated application contained therein, to connect to the wireless data link means of the control and management device (10) to remotely manage the electric pump.

2. The system according to claim 1, **characterized in that** the device (10) comprises a first connection and electric power supply cable (14) which can be connected to an electrical mains (L).

3. The system according to claim 2, **characterized in that** the electric pump (11) comprises a second connection and electric power supply cable (15) which can be connected to said electrical mains (L), said electrical mains (L) being the power supply mains both of said electric pump (11) and of said device (10).

## Patentansprüche

1. Elektrisches Eintauchpumpensystem, das Folgendes umfasst;
- eine Vorrichtung (10) zur Steuerung und Verwaltung von mindestens einer elektrischen Tauchpumpe, die Folgendes umfasst:
- ein Element (16) für die Betätigung der genannten Vorrichtung (10);
- eine Benutzerschnittstelle (20), die mit dem Betätigungselement (16) verbunden ist;
- PLC-Datenverbindungsmittel (12); und
- eine drahtlose Datenverbindung (17);
- das System umfasst außerdem die mindestens eine elektrische Tauchpumpe (11), die Folgendes umfasst:
- ein Pumpengehäuse, das zum Eintauchen konfiguriert ist;
- eine Betätigungs- und Stromversorgungseinheit und;
- ein komplementäres PLC-Datenverbindungsmittel (13), das innerhalb des Pumpengehäuses angeordnet und mit der Betätigungs- und Stromversorgungseinheit verbunden ist;
- wobei das komplementäre PLC-Datenverbindungsmittel (13) mit dem Gerät (10) verbunden werden kann;
**dadurch gekennzeichnet, dass**:
- die komplementäre PLC-Datenverbindungseinrichtung (13) mit der PLC-Datenverbindungseinrichtung (12) verbindbar ist, um Steuersignale von der Benutzerschnittstelle zu empfangen,
- die Benutzerschnittstelle (20) durch ein Smartphone oder Tablet und eine darin enthaltene spezielle Anwendung gebildet wird, um sich mit den drahtlosen Datenverbindungsmitteln der Kontroll- und Verwaltungsvorrichtung (10) zu verbinden, um die elektrische Pumpe aus der Ferne zu verwalten.

2. System nach Anspruch 1, **dadurch gekennzeichnet, dass** die Vorrichtung (10) ein erstes Anschluss- und Stromversorgungskabel (14) umfasst, das an ein Stromnetz (L) angeschlossen werden kann.

3. System nach Anspruch 2, **dadurch gekennzeichnet, dass** die elektrische Pumpe (11) ein zweites Anschluss- und Stromversorgungskabel (15) umfasst, das an das elektrische Netz (L) angeschlossen werden kann, wobei das elektrische Netz (L) das Stromversorgungsnetz sowohl der elektrischen Pumpe (11) als auch der Vorrichtung (10) ist.

## Revendications

1. Système de pompe électrique à immersion, comprenant;
- un dispositif (10) de contrôle et de gestion d'au moins une pompe électrique à immersion, comprenant:
- un élément (16) pour l'actionnement dudit dispositif (10);
- une interface utilisateur (20), connectée à l'élément d'actionnement (16);
- moyens de liaison de données PLC (12); et
- des moyens de liaison de données sans fil (17);
- le système comprend en outre ladite au moins une pompe électrique à immersion (11), comprenant:
- un corps de pompe configuré pour être immergé;
- une unité d'actionnement et d'alimentation et;
- des moyens de liaison de données PLC complémentaires (13) disposés à l'intérieur du corps de pompe et connectés à ladite unité d'actionnement et d'alimentation;
- ledit moyen de liaison de données PLC complémentaire (13) pouvant être connecté audit dispositif (10);
**caractérisé en ce que**:
- ledit moyen de liaison de données PLC complémentaire (13) peut être connecté audit moyen de liaison de données PLC (12) pour recevoir des signaux de commande de ladite interface utilisateur,
- ladite interface utilisateur (20) est constituée d'un smartphone ou d'une tablette et d'une application dédiée qu'il contient, pour se connecter aux moyens de liaison de données sans fil du dispositif de contrôle et de gestion (10) afin de gérer à distance la pompe électrique.

2. Système selon la revendication 1, **caractérisé par le fait que** le dispositif (10) comprend un premier câble de connexion et d'alimentation électrique (14) qui peut être connecté à un réseau électrique (L).

3. Système selon la revendication 2, **caractérisé en ce que** la pompe électrique (11) comprend un deuxième câble de connexion et d'alimentation électrique (15) qui peut être connecté audit réseau électrique (L), ledit réseau électrique (L) étant le réseau d'alimentation à la fois de ladite pompe électrique (11) et dudit dispositif (10).
